# EUROPEAN PATENT APPLICATION

(11) **EP 4 597 340 A1**
(43) Date of publication of application: **06.08.2025**
(21) Application number: 24162992.2
(22) Date of filing: 12.03.2024
(51) Int. Cl.: G06F 21/10, G06F 21/12, G06F 21/31, G06F 21/62

(54) **MODEL WEIGHTS**

(30) Priority: 31.01.2024 US 202463627326 P
(71) Applicant: Koninklijke Philips N.V., 5656 AG Eindhoven (NL)
(72) Inventor: COKKARCHEDU KANTHARAO, Praveen, Eindhoven (NL); NARAYANASWAMY, Suresha Gandarajapur, Eindhoven (NL); CHEGU RAMESH, Jeevan, Eindhoven (NL); SRIPAD, Pradyumna, Eindhoven (NL); STAPLETON, Shawn Arie Peter, Eindhoven (NL); KAKATHKAR, Varsha, Eindhoven (NL); SISODIA, Rajendra Singh, Eindhoven (NL)
(74) Representative: Philips Intellectual Property & Standards

(57) **Abstract**

Proposed concepts thus aim to provide schemes, solutions, concepts, designs, methods and systems pertaining to protecting model weights. In particular, embodiments aim to provide a system for protecting model weights by having the model weights stored as machine-compiled code in a machine-learning model and then further embedding a security gate layer inside the machine-learning model which only passes through inputs with valid authentication tokens. In other words, it is proposed that by embedding a security gate layer within the machine-learning model itself, the gate layer can be less easily bypassed and model weights, stored as machine-compiled code, can be less easily indirectly or directly stolen.

## Description

### FIELD OF THE INVENTION

This invention relates to the field of protecting model weights of a trained machine-learning model.

### BACKGROUND OF THE INVENTION

With advances in technology, edge devices like mobile phones, IoT devices and healthcare devices, can now run machine-learning models, allowing developers to opt for on-device model inferencing which helps in preserving privacy, having faster inference time and reduced bandwidth usage. However, with on-device model inferencing, developers lose control over the model as it can be stored in millions of untrusted devices. This leads to both financial and security risk because data used for the model training might contain restricted personally identifiable information (PII) as well as model architecture and model weights, which themselves might be intellectual property.

Currently, a commonly used security measure is to protect models by using standard encryption. The encrypted model can then be stored in edge devices, where the model is decrypted and predictions obtained while performing inference. Even though this protects a model from attackers when it is encrypted, adversaries can easily access the model weights directly from the memory location or buffer when a model is decrypted for inferencing. Aside from directly stealing weights from the edge devices, attackers can also recreate the model by iteratively training another model using outputs from the victim model.

### SUMMARY OF THE INVENTION

The invention is defined by the claims.

According to examples in accordance with an aspect of the invention, there is provided a system for protecting model weights.

The system comprises: a trained machine-learning model comprising: model weights stored as machine-compiled code; and a security gate layer configured to: receive an input to the trained machine-learning model; determine whether the input comprises a valid authentication token; and control provision of the input to the rest of the trained machine-learning model based on whether the input comprises a valid authentication token.

Proposed concepts thus aim to provide schemes, solutions, concepts, designs, methods and systems pertaining to protecting model weights. In particular, embodiments aim to provide a system for protecting model weights by having the model weights stored as machine-compiled code in a machine-learning model and then further embedding a security gate layer inside the machine-learning model which only passes through inputs with valid authentication tokens.

In other words, it is proposed that by embedding a security gate layer within the machine-learning model itself, the gate layer can be less easily bypassed and model weights can be less easily indirectly stolen via recreation (using many inputs and outputs). Further, by having the model weights of the security gate layer stored as (after being transformed/converted to) machine-compiled code, even if the weights were somehow directly accessed, they could not be easily stolen and used to replicate the trained machine-learning model.

Therefore, by having the model weights stored as machine-compiled code and then further providing a security gate layer in the machine-learning model which only passes through inputs with valid authentication tokens, the model weights can be protected both from direct stealing (e.g., from memory locations or buffers on an edge device) and from indirect recreation (through abuse of the model, e.g., using many inputs and outputs). Trained machine-learning models can therefore be more securely deployed on edge devices with reduced financial and security risks (i.e., from the model weights being copied and the model effectively being stolen).

In summary, the invention proposes to introduce a novel security layer inside a trained model and convert model object files (model weights) to machine compiled code in order to protect the model from any model stealing attacks. Here, the security layer works as a gate to the model, which will allow the inputs to be passed through it only if the requesting entity is validated, and the model weights being stored as machine compiled code prevents the weights from being stolen even if direct access to the weights is somehow obtained.

In some embodiments, the system may further comprise an access manager configured to determine whether an authentication token in an input is valid. This provides an efficient and/or effective way to determine whether an authentication token is valid or not, such that it can be efficiently and/or effectively determined whether the input comprises a valid authentication token or not.

In some embodiments, the access manager may be further configured to generate a valid authentication token in response to a request from a user. In this way, there is provided an efficient and/or effective system for allowing a user to request and obtain valid authentication tokens in order to then send inputs to the machine-learning model.

In some embodiments, the access manager may be further configured to authenticate a requesting user's identity and to only generate a valid authentication token in response to the user's identity being authenticated. In this way, valid authentication tokens may only be generated for a select subset of users, e.g., authenticated users. This can therefore provide greater security against potential bad actors obtaining valid authentication tokens.

In some embodiments, the access manager may be further configured to controllably invalidate a valid authentication token. In this way, a user who, for example, has been found to be abusing the machine-learning model (e.g., trying to steal the weights) can have their authentication token remotely invalidated.

In some embodiments, the system may further comprise an edge device and the edge device may comprise the trained machine-learning model. This facilitates model weights of the trained machine-learning model being protected on edge devices.

In some embodiments, the edge device may not comprise the access manager. In this way, the access manager can be kept separate from the edge device such that its integrity may be ensured, as well as one access manager being able to manage a plurality of edge devices.

In some embodiments, the edge device may comprise a local access manager configured to determine whether an authentication token in an input is valid and to generate a valid authentication token in response a request from a user only if the edge device comprises a valid license key. In this way, the system may work even when the edge device is offline, i.e., not connected remotely to an access manager.

According to another aspect of the invention, there is provided a computer-implemented method for constructing a system for protecting model weights. The method comprising: obtaining a trained machine-learning model; transforming model weights of the trained machine-learning model to machine-compiled code; and embedding a security gate layer inside the trained machine-learning model, wherein the security gate layer is configured to: receive an input to the trained machine-learning model; determine whether the input comprises a valid authentication token; and control provision of the input to the rest of the trained machine-learning model based on whether the input comprises a valid authentication token.

According to another aspect of the invention, there is provided a computer-implemented method for authenticating input requests for a system for protecting model weights. The method comprising: sending, by a user, an input to a trained machine-learning model comprising model weights stored as machine-compiled code; receiving, by a security gate layer of the trained machine-learning model, the input; determining whether the input comprises a valid authentication token; and controlling provision of the input to the rest of the trained machine-learning model based on whether the input comprises a valid authentication token.

In some embodiments, determining whether the input comprises a valid authentication token may comprise, if the input comprises an authentication token, determining whether the authentication token is valid.

In some embodiments, the method may further comprise generating a valid authentication token in response to a request from a user.

In some embodiments, generating a valid authentication token in response to a request from a user may comprise authenticating a user's identity and only generating a valid authentication token in response to the user's identity being authenticated.

In some embodiments, sending the input may comprise adding to the user's input a valid authentication token associated with the user. This allows the user to simply send an input and have a valid authentication token automatically added to the input, thereby streamlining the process for the user.

According to another aspect of the invention, there is provided a computer program comprising code means for implementing the method of any herein disclosed method when said program is run on a processing system.

Thus, there may be proposed concepts for protecting model weights, and this may be done based on having the model weights stored as machine-compiled code in a machine-learning model and then further embedding a security gate layer inside the machine-learning model which only passes through inputs with valid authentication tokens.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified block diagram of a system for protecting model weights according to a proposed embodiment;
Fig. 2 is a block diagram of a system for protecting model weights according to a proposed embodiment;
Fig. 3 is a simplified flow diagram of a computer-implemented method for constructing a system for protecting model weights according to a proposed embodiment;
Fig. 4 is a simplified flow diagram of a computer-implemented method for authenticating input requests for a system for protecting model weights according to a proposed embodiment;
Fig. 5 is a flow diagram of a computer-implemented method for authenticating input requests for a system for protecting model weights according to a proposed embodiment; and
Fig. 6 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to protecting model weights. According to proposed concepts, a number of possible solutions may be implemented separately or jointly. That is, although these possible solutions may be described below separately, two or more of these possible solutions may be implemented in one combination or another.

Embodiments of the invention aim to provide a system for protecting model weights. Proposed concepts thus aim to provide schemes, solutions, concepts, designs, methods and systems pertaining to protecting model weights. In particular, embodiments aim to provide a system for protecting model weights by having the model weights stored as machine-compiled code in a machine-learning model and then further embedding a security gate layer inside the machine-learning model which only passes through inputs with valid authentication tokens.

In other words, it is proposed that by embedding a security gate layer within the machine-learning model itself, the gate layer can be less easily bypassed and model weights can be less easily indirectly stolen via recreation (using many inputs and outputs). Further, by having the model weights of the security gate layer stored as (after being transformed/converted to) machine-compiled code, even if the weights were somehow directly accessed, they could not be easily stolen and used to replicate the trained machine-learning model.

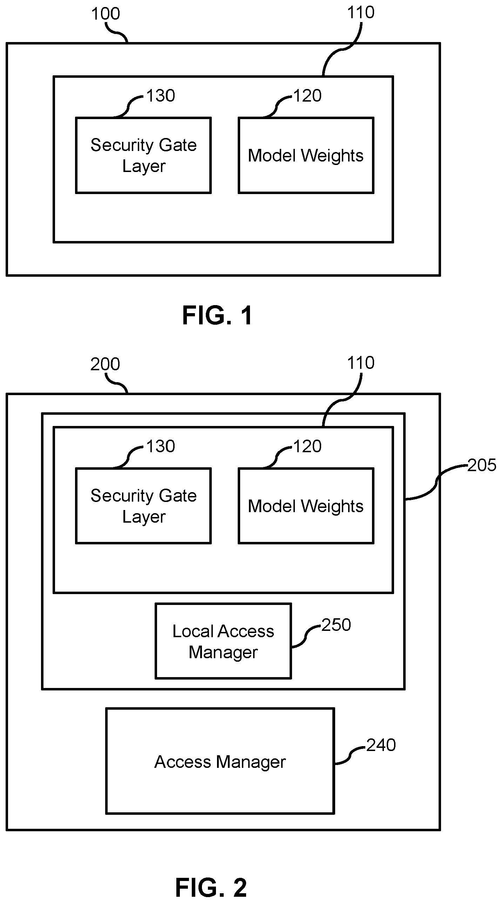

Referring now to Fig. 1, there is depicted a simplified block diagram of a system 100 for protecting model weights according to a proposed embodiment. In other words, the system 100 is for protecting model weights of a trained machine-learning model.

The system 100 comprises a trained machine-learning model 110. For example, the trained machine-learning model can comprise at least one of a linear regression model, including both simple and multiple linear regression models; a logistic regression model; a support vector machine; a neural network, such as a CNN or an ANN; a decision tree model; a gradient boosting model; a naive bayes model; and a linear discriminant analysis model.

The trained machine-learning model 110 comprises model weights 120 stored as machine-compiled code. Model weights refer to the parameters that the algorithm learns during the training phase. These weights are crucial for making predictions based on input data. In a supervised learning setting, the model is presented with a dataset containing input features and corresponding labels. The algorithm adjusts its internal parameters, including weights, to minimize the difference between its predictions and the actual labels. The learning process involves iteratively updating these weights to improve the model's performance.

For example, in a linear regression model, weights represent the coefficients assigned to each input feature. The model makes predictions by multiplying the input features by their respective weights and summing them up. In neural networks, weights are associated with the connections between neurons in different layers. During training, these weights are adjusted using techniques like backpropagation and gradient descent, aiming to reduce the difference between predicted and actual outcomes.

In essence, model weights capture the relationships between input features and the target variable. They reflect the learned patterns and dependencies in the data, enabling the model to generalize and make accurate predictions on new, unseen instances. Understanding and interpreting these weights can provide insights into the significance of different features and how they contribute to the model's decision-making process.

Machine-compiled code refers to executable programs that have undergone a compilation process, converting high-level programming languages like C, C++, Java, or Python into machine code or an intermediate representation. Programmers write source code, and a compiler translates it, performing tasks such as lexical and syntax analysis, optimization, and code generation. The output is machine code, specific to the target machine's architecture, or an intermediate code. This compiled code is stored in an executable file, which, when run, allows the CPU to directly execute the instructions specified by the original source code. Machine-compiled code is known for its efficiency and speed as it doesn't require interpretation at runtime, and examples of compiled languages include C, C++, and Rust.

Storing the model weights as machine-compiled code thus allows the weights to be kept on an edge device, for example, with a reduced risk of being stolen as even if direct access to the weights is gained, they will not be in a form where they can be easily stolen. In other words, the weights will not be stored in a human-readable form, therefore protecting the weights against certain types of attacks.

For example, a model trained for a specific use case will often be an organization's intellectual property, and if an attacker gains access to the model, they will typically also gain access to the model's architecture. This can be prevented, however, if a model object (e.g., the model weights) are converted to machine-compiled code, as attackers cannot de-obfuscate binaries.

For example, typically while deploying models to edge devices, model weights and architecture are usually stored as <filename>.pt or <filename>.h5 files on the destination devices, which is an environment prone to attacks. This is because anyone with basic machine learning knowledge can load and read these weights and architecture files. Another way of deployment is to encrypt the weights file and store it on the edge devices. Even though encryption protects the trained model weights while in transit, attacks can steal the model weights even if they are encrypted, and so the model is still susceptible to model stealing attacks. To prevent these attacks, trained model weights can be protected by obfuscating model objects, i.e., by transforming the model weights to machine-compiled code.

Model weights obfuscation is based on the principle of software code obfuscation, whereby code is transformed into an object unreadable format. Even though unauthorised inferencing is prevented by the security gate layer, an attacker with advanced machine-learning knowledge could potentially inspect the model layers and remove the security gate layer. To prevent such model tampering, model weight obfuscation is thus also provided (i.e., transforming the model weights to a machine-compiled code). In this process, all dependencies of the weights file and architecture class are removed before passing to the edge device for deployment by compiling model object states (weights and architecture in memory) to machine-compiled code. The advantages of converting model weights to machine-compiled code is to protect model architecture and trained weights and also to prevent tampering of models even if the security gate layer is somehow removed.

For example, by storing the model weights as machine-compiled code, removal of the security gate layer is made harder and prevents third parties from understanding the architecture of the model. This therefore aids in preventing intellectual property theft. Deep learning models often represent significant investments in terms of time, expertise and resources. Having the model weights (and potentially architecture) stored as machine-compiled code prevents third parties from having access to this intellectual property. Furthermore, storing the model weights as machine-compiled code can prevent techniques such as Grad-CAM being employed to gain an understanding of the model's behaviour and applications. For example, visualization of the model's attention can highlight vulnerabilities which can be used to manipulate the model or to infer information about the original creators' data collection and preparation methodologies - but this is made far harder if the weights are stored as machine-compiled code.

The trained machine-learning model 110 also comprises a security gate layer 130 configured to: receiving an input to the trained machine-learning model; determine whether the input comprises a valid authentication token; and control provision of the input to the rest of the trained machine-learning model based on whether the input comprises a valid authentication token.

Receiving an input to the trained machine-learning model can be understood as the security gate layer 130 stopping/intercepting an input from actually being input to an algorithm (or inference engine) of the trained machine-learning model 110 (i.e., stopping the ML model 110 from actually processing the input in order to generate an output). The security gate layer 130 then determines whether the input comprises a valid authentication token (i.e., alongside the actual user input data to be input and processed by the ML model 110). The security gate layer 130 is then configured to control provision of the input to the rest of the trained ML model 110 (i.e., the actual algorithm / inference engine of the trained ML model 110 containing the model weights 120) based on whether the input comprises a valid authentication token.

To be clear, the security gate layer 130 is configured to pass the input through to the rest of the machine-learning model 110 if the input comprises a valid authentication token and to block the input from passing to the rest of the ML model 110 if the input does not comprise a valid authentication token (e.g., does not contain an authentication token at all or comprises an invalid authentication token). In other words, the security gate layer 130 is configured to allow the machine-learning model 110 to process the input and generate an output if the input comprises a valid authentication token and to prevent the machine-learning model 110 from processing the input and generating an output if it does not comprise a valid authentication token.

For example, normally models in edge devices are encrypted during deployment, which means they need to be decrypted and loaded into memory to get predictions. Here, attackers can easily get access to the memory buffer where the model is loaded. However, with the current invention, attackers would need to provide a valid authentication token to get valid predictions from the model.

For example, attackers can sometimes use brute force methods to generate data samples similar to training data. However, this can be prevented if the model is protected by token authentication. This can also facilitate data access monitoring. Often, a model can contain traces of personally identifiable information and using authentication tokens allows the tracking of all users and systems who have interacted with the model.

Further, in the case of a series of connected ML models, where the output of one model is input into another model, use of the authentication tokens (i.e., the security gate layer 130) can help to prevent hijack attacks from an attacker if different models require different tokens based on, for example, access roles.

For example, an attacker without knowledge of the system 100 might try to send an input to the machine-learning model without attaching / bundling an authentication token along with it. Once, the model receives the input, the security gate layer 130 will check that the input has a valid authentication token. On seeing that there is no authentication token present, the security gate layer will discard the input or simply output the input without any processing. This therefore prevents inference of the model even if the attacker has black box access.

It should be noted that it has been tested that the addition of a security gate layer to a machine-learning model does not affect the accuracy of the model, however, can slightly increase the time it takes from input to output.

Referring now to Fig. 2, there is depicted a block diagram of a system 200 for protecting model weights according to a proposed embodiment.

The system 200 comprises an edge device 205 and an access manager 240. The edge device 205 comprises a trained machine-learning model 110 which is substantially the same as the trained machine-learning model 110 described in relation to system 100 of Fig. 1. The trained machine-learning model 110 accordingly comprises model weights 120 and a security gate layer 130.

Edge devices 205 are devices that perform computation and data processing closer to the source of data generation, reducing the need for data to travel long distances to centralized servers. Examples of edge devices include smartphones, tablets, smartwatches, Internet of Things (IoT) devices like sensors and actuators, smart cameras, edge servers, drones, embedded systems in vehicles, home automation devices, and industrial control systems. These devices enable real-time processing, lowlatency interactions, and efficient use of network bandwidth by handling data locally rather than relying solely on remote cloud servers. For example, the edge device 205 can comprise a health care device like a patient monitor, a Point-of-Care device, a console/workstation device connecting to imaging modalities, etc.

In this embodiment, the system 200 comprises an access manager 240 configured to determine whether an authentication token in an input is valid. This provides an efficient and/or effective way to determine whether an authentication token is valid or not, such that it can be efficiently and/or effectively determined whether the input comprises a valid authentication token or not.

As can be seen, in this embodiment, the edge device 205 does not comprise the access manager 240, i.e., the access manager 240 is separate to the edge device 205. In this way, the access manager 240 can be kept separate from the edge device (e.g., in a central server) such that its integrity can be ensured. Further, the same access manager 240 can be used to control access to a plurality of edge devices 205, all of which can comprise their own trained-machine learning model 110.

In this embodiment, the access manager 240 is configured to generate a valid authentication token in response to a request from a user. In this way, there is provided an efficient and/or effective system for allowing a user to request and obtain valid authentication tokens in order to then send inputs to the machine-learning model 110.

Further, in this embodiment, the access manager 240 is configured to authenticate a requesting user's identity and to only generate a valid authentication token in response to the user's identity being authenticated. In this way, valid authentication tokens can be generated only for a select subset of users, e.g., authenticated users. This can therefore provide greater security against potential bad actors obtaining valid authentication tokens. Various methods can be employed for identity authentication. One common approach is through the use of passwords or passphrases, where users enter a secret code that only they should know. Biometric authentication utilizes unique physical or behavioural characteristics, such as fingerprints, facial features, or voice patterns, to confirm identity. Two-factor authentication (2FA) combines multiple authentication methods, often involving a combination of something the user knows (password) and something the user possesses (like a mobile device for receiving authentication codes). Multi-factor authentication (MFA) extends this by incorporating additional factors, such as something the user is (biometrics). Security tokens, smart cards, and one-time passcodes sent via SMS or authenticator apps are other methods to enhance identity verification.

Further, in this embodiment, the access manager 240 is configured to controllably invalidate a valid authentication token. In this way, a user who, for example, has been found to be abusing the machine-learning model (e.g., trying to steal the weights) can have their authentication token remotely invalidated. In other words, sometimes access may need to be provided to the model inferencing for users or systems only for fixed intervals of time. That being the case, the authentication tokens can be made obsolete / invalidated and thereby prevent unauthorized inferencing even without direct access to the (edge) devices where the model is deployed.

In this embodiment, the edge device 205 also comprises a local access manager 250. The local access manager 250 is configured to determine whether an authentication token in an input is valid and to generate a valid authentication token in response a request from a user only if the edge device comprises a valid license key. In this way, the system 200 can work even when the edge device is offline, i.e., not connected remotely to an access manager 240. For instance, the system 200 can typically use the access manager 240 if the edge device 205 can establish a connection to the access manager 240 and only use the local access manager 250 if it cannot. In some embodiments, the local access manager 250 can only be used to determine whether an authentication token is valid for a predetermined time period after connection to the access manager 240 is lost.

A valid license key can be understood as a unique and authorized identifier stored in a device that indicates that the device has a right to access and use an associated software or service, in this case, the trained machine-learning model 110. It is typically an alphanumeric code or cryptographic key. For example, in some embodiments, the valid license key can be generated and sent to the edge device 205 by the access manager 240 after the user's identity has been authenticated.

For example, in a deployment pipeline, the environment can be divided into two stages. The first stage can be considered a safe environment in which the machine-learning model is designed and trained, and to which only developers have access. The second stage is where the model is deployed to edge devices or cloud environments, which are prone to attacks. Once the model is deployed, developers do not have much control over the model. The security gate layer 130 can be considered a novel machine-learning (neural network) layer whose role is to authorize the requesting entity to perform inferencing. This layer is embedded into the front of the trained model, and essentially acts as a security barrier for input data, requiring a valid authentication token (or key) to pass input data to the trained model to generate predictions. If an entity wants to perform inferencing, it therefore needs to authenticate itself (for example, with an access manager) and generate a valid authentication token. This token essentially acts as a key for the security gate layer.

The advantages of embedding the security gate layer 130 into the trained model is such that even if a bad actor steals the model, they will be unlikely to be able to use it as they would need a valid authentication token to be able to input anything. By embedding the security gate layer into the model, rather than merely including the security gate layer in an input interface of a larger system including the model, the security gate layer can be less easily removed and therefore less easily circumvented. Furthermore, other methods in the art used to prevent model stealing attacks suggest modifying the training process, however, this can lead to degradation of the model performance. By embedding the security gate layer into the model, however, and not adjusting the training in any way, there is no impact on the performance of the model. Lastly, the concept of embedding a security gate layer into a trained model can be applied to any type of deep learning model and is applicable to all architectural variations.

For example, in many hospitals or clinical environments, a trained machine-learning model can be deployed on consoles and their access restricted to specific specialists (e.g., radiologists, cardiologists, etc.) or for specific procedures. This is particularly relevant when the model is to be used as per clinical guidelines or is tied with pay per use models. In these situations, the access manger can only consider the identity of the user, but also the purpose of the use before generating a valid authentication token for them or before authenticating the authentication token, for example. In another example, there could be use cases within healthcare where the trained machine-learning model is specially trained for a specific purpose (e.g., as a screening device or diagnosing device). The security layer can thus also be used to enforce such a purpose, e.g., if the trained machine-learning model is used for diagnosing when a valid authentication token was claimed for screening purposes, then the authentication token can be made invalid, for example. In other words, in some embodiments, the access manager can be configured to invalidate a valid authentication token based on prior use of the trained machine-learning model using the valid authentication token.

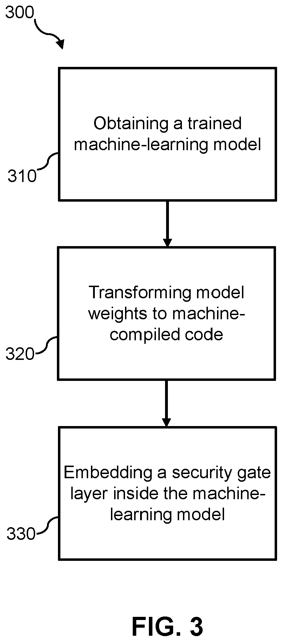

Referring now to Fig. 3, there is depicted a simplified flow diagram of a computer-implemented method 300 for constructing a system for protecting model weights (such as system 100 or 200) according to a proposed embodiment.

The method 300 begins with step 310 of obtaining a trained machine-learning model. This can comprise, for example, training a machine-learning model in order to generate a trained machine-learning model, or obtaining one pre-trained, e.g., from a third party. Step 320 comprises transforming (i.e., converting) model weights of the trained machine-learning model to machine-compiled code. For example, a compiler can be used to perform step 320, as would be understood by the skilled person. Step 330 comprises embedding a security gate layer inside the trained machine-learning model, wherein the security gate layer is configured to: receive an input to the trained machine-learning model; determine whether the input comprises a valid authentication token; and control provision of the input to the rest of the trained machine-learning model based on whether the input comprises a valid authentication token.

In some embodiments, the method 300 comprises a further, final step of deploying the trained machine-learning model to an edge device.

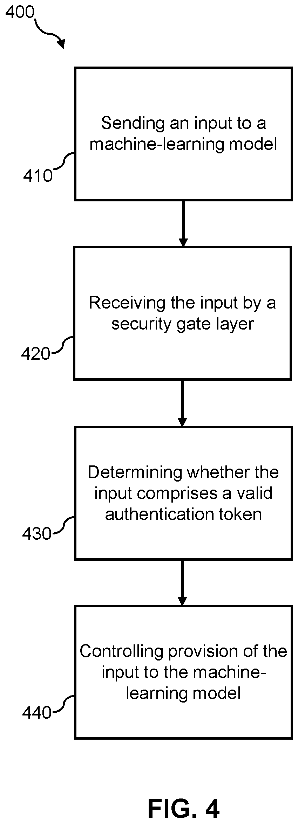

Referring now to Fig. 4, there is depicted a simplified flow diagram of a computer-implemented method 400 for authenticating input requests for a system for protecting model weights (such as system 100 or 200) according to a proposed embodiment.

The method 400 begins with step 410 of sending, by a user, an input to a trained machine-learning model comprising model weights stored as machine-compiled code. Step 420 comprises receiving, by a security gate layer of the trained machine-learning model, the input. Step 430 comprises determining whether the input comprises a valid authentication token. Step 440 comprises controlling provision of the input to the rest of the trained machine-learning model based on whether the input comprises a valid authentication token. In other words, if the input does comprise a valid authentication token, the input data (i.e., the user's actual input) is forwarded to the rest of the trained model (i.e., the inference engine of the trained model containing the model weights) to be processed and thereby generating a prediction.

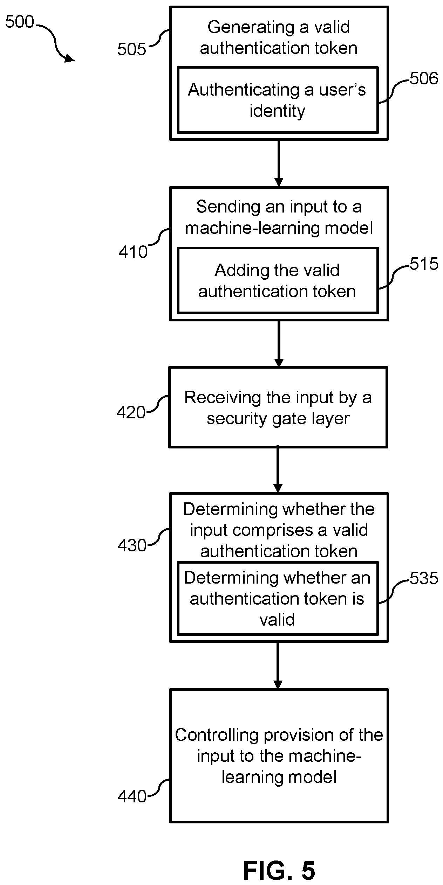

Referring now to Fig. 5, there is depicted a flow diagram of a computer-implemented method 500 for authenticating input requests for a system for protecting model weights (such as system 100 or 200) according to a proposed embodiment.

Steps 410, 420, 430 and 440 are substantially the same as those described in relation to method 400 of Fig. 4. Method 500 further comprises step 505 which comprises generating a valid authentication token in response to a request from a user. In this embodiment, step 505 further comprises step 506 of authenticating a user's identity and only generating a valid authentication token in response to the user's identity being authenticated. In other words, as a first step, the requesting entity interacts with an access manager, for example, to generate a valid authentication token by passing (identity) credentials. Based on the credentials, the access manager can then authenticate the requesting entity's identity and respond with a valid access token.

In this embodiment, step 410 further comprises step 515 of adding to the user's input a valid authentication token associated with the user. This allows the user to simply send an input (i.e., input data) and have a valid authentication token automatically added to the input, thereby streamlining the process for the user. In other words, the valid authentication token and data features (the user's actual input) are combined and sent to the model.

In this embodiment, step 430 further comprises step 535 of, if the input comprises an authentication token, determining whether the authentication token is valid. For example, the security gate layer of machine-learning model can check the provided authentication token with an access manager to check if the authentication token is valid.

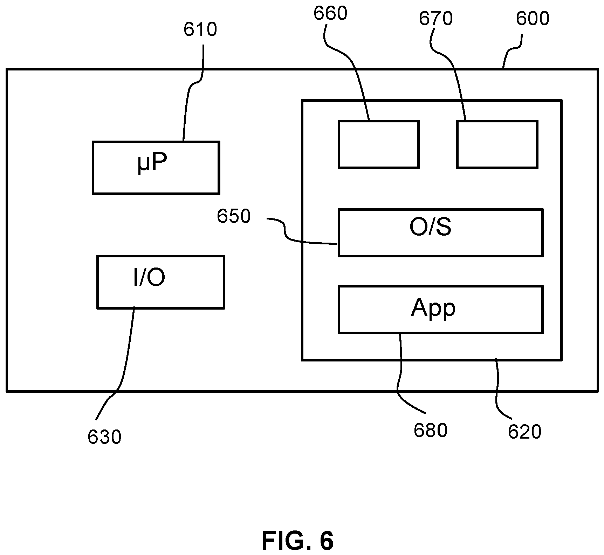

Fig. 6 illustrates an example of a computer 600 within which one or more parts of an embodiment may be employed. Various operations discussed above may utilize the capabilities of the computer 600. In this regard, it is to be understood that system functional blocks can run on a single computer or may be distributed over several computers and locations (e.g. connected via internet).

The computer 600 includes, but is not limited to, PCs, workstations, laptops, PDAs, palm devices, servers, storages, and the like. Generally, in terms of hardware architecture, the computer 600 may include one or more processors 610, memory 620 and one or more I/O devices 630 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 610 is a hardware device for executing software that can be stored in the memory 620. The processor 610 can be virtually any custom made or commercially available processor, a central processing unit (CPU), a digital signal processor (DSP), or an auxiliary processor among several processors associated with the computer 600, and the processor 610 may be a semiconductor based microprocessor (in the form of a microchip) or a microprocessor.

The memory 620 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 620 may incorporate electronic, magnetic, optical, and/or other types of storage media. Note that the memory 620 can have a distributed architecture, where various components are situated remote from one another, but can be accessed by the processor 610.

The software in the memory 620 may include one or more separate programs, each of which comprises an ordered listing of executable instructions for implementing logical functions. The software in the memory 620 includes a suitable operating system (O/S) 650, compiler 660, source code 670, and one or more applications 680 in accordance with exemplary embodiments. As illustrated, the application 680 comprises numerous functional components for implementing the features and operations of the exemplary embodiments. The application 680 of the computer 600 may represent various applications, computational units, logic, functional units, processes, operations, virtual entities, and/or modules in accordance with exemplary embodiments, but the application 680 is not meant to be a limitation.

The operating system 650 controls the execution of other computer programs, and provides scheduling, input-output control, file and data management, memory management, and communication control and related services. It is contemplated by the inventors that the application 680 for implementing exemplary embodiments may be applicable on all commercially available operating systems.

Application 680 may be a source program, executable program (object code), script, or any other entity comprising a set of instructions to be performed. When a source program, then the program is usually translated via a compiler (such as the compiler 660), assembler, interpreter, or the like, which may or may not be included within the memory 620, so as to operate properly in connection with the O/S 650. Furthermore, the application 680 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 630 may include input devices such as, for example but not limited to, a mouse, keyboard, scanner, microphone, camera, etc. Furthermore, the I/O devices 630 may also include output devices, for example but not limited to a printer, display, etc. Finally, the I/O devices 630 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 630 also include components for communicating over various networks, such as the Internet or intranet.

If the computer 600 is a PC, workstation, intelligent device or the like, the software in the memory 620 may further include a basic input output system (BIOS) (omitted for simplicity). The BIOS is a set of essential software routines that initialize and test hardware at start-up, start the O/S 650, and support the transfer of data among the hardware devices. The BIOS is stored in some type of read-only-memory, such as ROM, PROM, EPROM, EEPROM or the like, so that the BIOS can be executed when the computer 600 is activated.

When the computer 600 is in operation, the processor 610 is configured to execute software stored within the memory 620, to communicate data to and from the memory 620, and to generally control operations of the computer 600 pursuant to the software. The application 680 and the O/S 650 are read, in whole or in part, by the processor 610, perhaps buffered within the processor 610, and then executed.

When the application 680 is implemented in software it should be noted that the application 680 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 680 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The systems of Figs. 1 and 2, and the methods of Figs. 3-5, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 6 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

## Claims

1. A system (100) for protecting model weights, the system comprising:
a trained machine-learning model (110) comprising:
model weights (120) stored as machine-compiled code; and
a security gate layer (130) configured to:
receive an input to the trained machine-learning model;
determine whether the input comprises a valid authentication token; and
control provision of the input to the rest of the trained machine-learning model based on whether the input comprises a valid authentication token.

2. The system of claim 1, wherein the system further comprises an access manager (240) configured to determine whether an authentication token in an input is valid.

3. The system of claim 2, wherein the access manager (240) is further configured to generate a valid authentication token in response to a request from a user.

4. The system of claim 3, wherein the access manager (240) is further configured to authenticate a requesting user's identity and to only generate a valid authentication token in response to the user's identity being authenticated.

5. The system of any of claims 2 to 4, wherein the access manager (240) is further configured to controllably invalidate a valid authentication token.

6. The system of any of claims 1 to 5, wherein the system further comprises an edge device (205), and wherein the edge device comprises the trained machine-learning model (110).

7. The system of claim 6, dependent on any of claims 2 to 5, wherein the edge device (205) does not comprise the access manager (240).

8. The system of claim 6 or 7, dependent on any of claims 2 to 5, wherein the edge device (205) comprises a local access manager (250) configured to determine whether an authentication token in an input is valid and to generate a valid authentication token in response a request from a user only if the edge device comprises a valid license key.

9. A computer-implemented method (300) for constructing a system for protecting model weights, the method comprising:
obtaining a trained machine-learning model (310);
transforming model weights (320) of the trained machine-learning model to machine-compiled code; and
embedding a security gate layer (330) inside the trained machine-learning model, wherein the security gate layer is configured to:
receive an input to the trained machine-learning model;
determine whether the input comprises a valid authentication token; and
control provision of the input to the rest of the trained machine-learning model based on whether the input comprises a valid authentication token.

10. A computer-implemented method (400) for authenticating input requests for a system for protecting model weights, the method comprising:
sending, by a user, an input (410) to a trained machine-learning model comprising model weights stored as machine-compiled code;
receiving, by a security gate layer of the trained machine-learning model, the input (420);
determining whether the input comprises a valid authentication token (430); and
controlling provision of the input (440) to the rest of the trained machine-learning model based on whether the input comprises a valid authentication token.

11. The computer-implemented method of claim 10, wherein determining whether the input comprises a valid authentication token comprises:
if the input comprises an authentication token, determining whether the authentication token is valid (535).

12. The computer-implemented method of claim 10 or 11, wherein the method further comprises generating a valid authentication token (505) in response to a request from a user.

13. The computer-implemented method of any of claims 10 to 12, wherein generating a valid authentication token in response to a request from a user comprises authenticating a user's identity (506) and only generating a valid authentication token in response to the user's identity being authenticated.

14. The computer-implemented method of any of claims 10 to 13, wherein sending the input comprises adding to the user's input a valid authentication token associated with the user (515).

15. A computer program comprising computer program code which is adapted, when said program is run on a processor, to perform the method of claims 9 to 14.
